# EUROPEAN PATENT APPLICATION

(11) **EP 2 544 035 A1**
(43) Date of publication of application: **09.01.2013**
(21) Application number: 11172991.9
(22) Date of filing: 07.07.2011
(51) Int. Cl.: G02B 6/44

(54) **Fibre-optic distribution device**

(71) Applicant: 3M Innovative Properties Company, Saint Paul, MN 55133-3427 (US)
(72) Inventor: Naudin, Thierry, 44700 Orvault (FR); Fleouter, Patrick, 44160 Pontchateau (FR)
(74) Representative: Bergen, Katja

(57) **Abstract**

Fibre-optic distribution device, comprising a wall-installable base panel (10) having a front side and an essentially flat rear side, the front side and the rear side facing into opposite directions, the base panel (10) comprising on its front side
- a mounting region (30), comprising mounting means (45, 46) for mounting a fibre-optic functional unit (70) on the mounting region (45, 46), and
- a fibre routing region (40), comprising routing means (60) for routing an optical fibre (90) from or to the mounting region (30). The base panel (10) further comprises panel fixing means (55) for installing the base panel (10) flat on a wall (120) such that the rear side of the base panel (10) faces the wall (120), the panel fixing means (55) being arranged on the rear side of the base panel (10).

## Description

The invention relates to fibre-optic distribution devices in the field of telecommunications, in particular to fibre-optic distribution frames, especially ones that can be installed on walls.

Telecommunications networks increasingly use optical fibres to transmit data between central computers of telecommunication providers and telecommunication customers or subscribers. Fibre-optic cables comprise a number of individual optical fibres. In numerous facilities along the path of optical transmission from the providers to the respective subscribers, individual fibres of a fibre-optic cable must be routed in different directions, e.g. distributed towards different sub-distribution facilities, and eventually towards different individual subscriber locations. In fibre-optic distribution devices, incoming optical fibres are connected to outgoing fibres leading to further distribution facilities or to individual subscribers.

If a subscriber changes his location, e.g. he moves from one building into another, in a fibre-optic distribution frame, an incoming fibre must be disconnected from one outgoing fibre and be connected to a different outgoing fibre which leads to the new location. This process is called "patching" and is preferably done by connecting incoming fibres to the input side of a first patch device, which provides optical connectors on its output side. A separate patch cable or patch cord or patch fibre is used to establish a connection between an output side optical connector of the first patch device and an input side optical connector of a second patch device. Outgoing fibres are connected to the output side of that second patch device. Patch devices are thus functional units for connecting incoming fibres to outgoing fibres by optical connectors and patch cords or patch cables or patch fibres. The words "patch cord", "patch fibre" and "patch cable" are used synonymously in the context of this application.

Two optical fibres can be connected permanently with each other by splicing. Certain functional units, for example splice trays, provide fibre guidance, support and space for such splices. Other functional units serve for fibre overlength storage or slack storage, i.e. they provide fibre guidance or cable guidance and space to store excess length of optical fibres. Other fibre-optic functional units serve other purposes.

One optical fibre can transmit a plurality of signals simultaneously. In functional units called splitters, these signals are split and directed into a plurality of individual fibres. Splitters are thus functional units that have one or more input fibres and multiple output fibres per input fibre.

For the purpose of distribution of fibre cables and individual fibres, fibre-optic distribution frames provide mounting space for functional units and also provide cable guidance and fibre guidance to and from functional units mounted in such a distribution frame. Adequate fibre and cable guidance is important, because an optical fibre that is bent below a certain minimum bend radius loses some of its transmission performance and/or may be damaged.

A distribution device for optical fibres is shown in the U.S. patent application 2006/0029353. A fibre-optic telecommunications frame includes termination modules on left and right sides of the frame. The frame has left and right vertical cable guides defining vertical channels for cables extending to and from the termination modules.

A different distribution frame is shown in the international patent application WO02/21182, in which two walls are mentioned that combine to form a wall partition with a transverse fibre-optic cable pathway to allow fibre from a plurality of fibre-optic connector trays to be routed into a fibre support area, routed on one or more of fibre supports and preferably through another transverse fibre-optic cable pathway and to one of fibre-optic connector trays on a second side of the framework.

Fibre-optic distribution frames are often installed in dedicated rooms or buildings. It is desirable to use the limited space offered by those rooms or buildings in a most efficient way. It is further desirable to reduce the overall weight of a fibre-optic distribution frame to make it easier to transport and to install. Also, it is in general desired to reduce the cost of fibre-optic distribution frames. It is also desirable that a fibre-optic distribution frame can be easily expanded such as to accommodate more functional units in one distribution frame and to route more patch cables between functional units mounted in the distribution frame, in order to provide connections for additional subscribers. The present invention seeks to address these problems.

The present invention provides a fibre-optic distribution device, comprising a wall-installable first base panel having a front side and an essentially flat rear side, the front side and the rear side facing into opposite directions, the base panel comprising on its front side a mounting region, comprising mounting means for mounting a fibre-optic functional unit on the mounting region, and a fibre routing region, comprising routing means for routing an optical fibre from or to the mounting region, characterized in that the base panel further comprises panel fixing means for installing the base panel flat on a wall such that the rear side faces the wall, the panel fixing means being arranged on the rear side of the base panel.

The base panel of the fibre-optic distribution device according to the invention can be installed on a wall. This may save space in the room or building where the fibre-optic distribution device is installed, because no space is required for a dedicated support structure. Instead, an existing wall of the room or building supports the fibre-optic distribution device mechanically. Since no dedicated support structure is required, the distribution device according to the invention may have less weight and may therefore be easier to transport and to install than traditional fibre-optic distribution devices. The fibre-optic distribution device according to the invention may also be more cost-effective to manufacture, because no extra support structure is required to provide mechanical support and/or rigidity to the base panel(s) of the fibre-optic distribution device.

The base panel of the fibre-optic distribution device according to the invention is wall-installable and has a front side and an essentially flat rear side. An essentially flat rear side may, however, comprise minor protrusions or minor recesses, such as, for example, protrusions or recesses for installing the base panel on a wall directly or via a mounting structure. Sections of the rear side of the base panel may protrude or recede with respect to other sections of the base panel rear side by a small distance, relative to the overall size of the base panel.

The base panel may have a peripheral outer edge. The base panel may have a rectangular shape. In the case of a rectangular base panel, the peripheral outer edge comprises the four straight edge sections delimiting the base panel. A peripheral outer edge refers to an outermost edge of the base panel, as seen from a central portion of the base panel. The base panel may have other edges than a peripheral outer edge. It may, for example, have edges around openings in an interior portion of the base panel.

The base panel has a mounting region on the front side. The mounting region provides space for, and comprises mounting means for, mounting one or more functional units thereon. A mounting region may, for example, be arranged in one half of the base panel or it may be arranged in the center of a base panel or it may be arranged in the vicinity of the peripheral outer edge of the base panel.

The mounting region comprises mounting means for mounting a fibre-optic functional unit thereon. Mounting means may, for example, comprise bolts, screws, nuts, hooks, threads, latches. Mounting means on the base panel may be suitable to engage with corresponding mounting means on the functional unit to be mounted. The mounting region may be arranged adjacent to the fibre routing region of the base panel. This may keep the routing path for a fibre short and may make additional routing means unnecessary.

A fibre-optic functional unit may be mounted to the mounting region. A functional unit may be, for example, a fibre-optic splitter, a fibre-optic filter, a patch device, a fibre termination device, a fibre interfacing device, a fibre splice tray, a fibre overlength storage device or a slack fibre storage device, a connector storage device, or an optical cable head.

Certain fibre-optic functional units may have multiple functionality. A functional unit may, for example, provide fibre overlength storage and splice holders. A functional unit may be an optical module providing functionality for optical fibres like splicing, slack storage and/or splitters. A functional unit may provide active functionality or passive functionality or both. Active functionality may be signal amplification or signal filtering, passive functionality may be splitting, splicing, termination and/or fibre overlength storage.

The base panel of the fibre-optic distribution device according to the present invention comprises a fibre routing region, located on front side of the base panel. The direction of fibre routing is independent from a direction that signals may travel in the routed fibre. A routing region provides space to route fibre-optic cables or fibres adequately. A routing region for fibre-optic cables or for optical fibres, for example, provides space to allow fibre-optic cables or single optical fibres to be routed without being bent below a minimum bend radius and without being subject to excessive pressure in a location along their length. Both an overly harsh bend and excessive local pressure may deteriorate the signal transmission performance of a fibre-optic cable or an optical fibre. A fibre routing region may further provide easy access for a person installing cables or fibres in the fibre routing region.

The fibre routing region may comprise a first and a second fibre entry region, each being arranged on the peripheral outer edge of the base panel. Each fibre entry region may allow a cable or an optical fibre to enter the fibre routing region from an outside of the base panel. Each fibre entry region may also allow a cable or an optical fibre to leave the fibre routing region towards an outside of the base panel. A fibre entry region may be shaped suitably to avoid damage to a cable or to an optical fibre entering or leaving the base panel through it.

The fibre entry regions may be arranged on the peripheral outer edge of the base panel. They may be arranged on opposed sections of the peripheral outer edge. In case of a rectangular base panel, they may be arranged on the same straight section of the peripheral outer edge, they may be arranged on opposed straight sections of the peripheral outer edge or on adjacent straight sections of the peripheral outer edge.

The fibre routing region may extend between the first and the second fibre entry region. The fibre routing region may extend in an essentially straight way between the fibre entry regions. It may alternatively extend in an S-shape or in a C-shape between the fibre entry regions. The fibre routing region may have a constant width, in the plane of the base panel, along its longitudinal extension between the fibre entry regions. It may alternatively have a varying width, in the plane of the base panel, along its longitudinal extension.

The fibre routing region comprises routing means for routing a cable or an optical fibre from or to the mounting region. Such routing means may, for example, be fingers or poles, extending in a direction perpendicular to the rear side of the base panel, where the cross section of a finger or a pole is adapted to provide a minimum bend radius to a cable or optical fibre that is routed by it. A typical minimum bend radius of a fibre-optic cable or an optical fibre is 25 mm. A routing means may be a finger or a pole having a circular cross section of a radius of 25 mm or more. A routing means may also be a finger or a pole having a cross section in which any curvature has a radius of 25 mm or more.

A routing means may, for example, be a hollow metal pole of a height of 18 cm, having a constant circular cross section of a radius of 25 mm, which extends from the base panel in a direction perpendicular to the rear side of the base panel.

The routing means is/are suitable for routing or guiding a cable or an optical fibre from or to the mounting region or from or to a fibre-optic functional unit mounted in the mounting region. A fibre-optic functional unit may be located in the vicinity of a routing means, so that a fibre coming from the functional unit is supported by the routing means within a short distance from the functional unit. A routing means may be associated to a part of the mounting region in which a functional unit can be mounted, so that a fibre coming from that functional unit is routed, by the routing means, into the fibre routing region directly and/or without leaving the fibre unsupported for a larger distance. Similarly, a routing means may be associated to a part of the mounting region in which a functional unit can be mounted, so that a fibre in the routing region is routed towards that functional unit, by the routing means, directly and/or without leaving the fibre unsupported for a larger distance.

The panel fixing means may be adapted for installing the base panel on a wall via a mounting structure. Installing the base panel on a wall via a mounting structure, i.e. via an intermediate structure, may be advantageous in that it increases the flexibility in the installation process. An intermediate mounting structure may, for example, be a mounting rail, that may be fixed to the wall. The mounting rail may have openings, recesses, or protrusions to enable mechanical engagement of a panel fixing means. The panel fixing means may engage with the mounting structure, which in turn may be fixed to the wall. Thereby, the base panel is installed on the wall.

The panel fixing means may comprise a protrusion for mechanically engaging with a protrusion, a recess or an opening in a mounting structure fixed to a wall. The protrusion may comprise a hook-shaped or a mushroom-shaped part. An example of such a protrusion is a metal tab that is bent into the shape of a "U", which is turned upside down, i.e. an inverted "U". One arm of the inverted-U-shaped tab may be fixed to the base panel. The other arm is may be adapted to engage with a corresponding suitably-shaped opening in the mounting structure, so that the base panel hangs on the mounting structure, which in turn is fixed to the wall. By lifting the base panel, the U-shaped tab may be released from the opening and the base panel may be removed from the mounting structure and from the wall. Similarly, hook-shaped or mushroom-shaped parts of the panel fixing means may be used to fix the base panel to a mounting structure. At least a part of the panel fixing means may have an L-shaped, a T-shaped, a U-shaped or a hook-shaped cross-section. The part having that cross section may be used to mechanically engage with the wall via a suitably shaped mounting structure.

The panel fixing means may comprise a recess or an opening for mechanically engaging with a protrusion of a mounting structure. The base panel may, for example, comprise two spaced planar parallel sheets of metal, one of them forming the rear side of the base panel. The rear side-forming sheet may comprise an opening that may engage with a hook-shaped protrusion in the mounting structure, which in turn is fixed to the wall, thereby installing the base panel on the wall. The part of the rear side sheet comprising the opening may then be considered the panel fixing means.

The base panel may be installed on the wall by placing it on protrusions of a mounting structure. A lower edge of the base panel may rest on the protrusions. In this case, the panel fixing means is considered to be the lower edge of the base panel.

The panel fixing means may be adapted for releasable installing of the base panel on a wall. This may facilitate exchange of base panels and may save cost in installation, modification and/or de-installation of a fibre-optic distribution device according to the invention. The panel fixing means for releasable installing may, for example, comprise an element having an inverted-U-shaped cross section, which can engage with a vertical edge of a mounting structure. In such an embodiment, the base panel may be lifted up and positioned such that the inverted-U-shaped panel fixing means is just above the vertical edge of the mounting structure. It is then lowered such that one arm of the inverted U slips behind the vertical edge into the space between the vertical edge and the wall or into the space between the vertical edge and the remainder of the mounting structure. The base panel may thereby be installed on the wall via the mounting structure. By virtue of gravity, it hangs from the mounting structure and from the wall. An indexing finger element on the panel may be provided that can be brought into engagement with an opening in the mounting structure to immobilize the base panel vertically and to prevent inadvertent lifting and removal. In the absence of such an indexing finger element, or once it is disengaged, the base panel can be released from the wall and from the mounting structure by lifting it, against the force of gravity, such that the inverted-U-shape is not located behind the vertical edge of the mounting structure any longer, and by then removing it horizontally from the wall and from the mounting structure.

The base panel may comprise a plurality of panel fixing means, the panel fixing means being linearly arranged. This may enable fixing the base panel to the wall in a plurality of locations, which in turn makes the fixing more reliable and avoids excessive mechanical load in one location on the panel. A linear arrangement may be beneficial in that it allows for the use of a mounting structure having a simple shape which is therefore more cost-effective to manufacture.

The fibre routing region may, in a specific aspect of the invention, comprise five routing means, wherein four of the routing means are arranged in the fibre routing region at the corners of a virtual rectangle, and a fifth routing means is arranged in the centre of the virtual rectangle. This arrangement may provide a very efficient fibre routing in all directions with a minimum number of fibre routing means. The base panel may be adapted to be installed on a vertical wall, and may comprise a cable tray for routing an optical fibre horizontally towards a peripheral outer edge of the base panel.The functional unit may comprise a splitter, a splitter module, a splice tray, a connector storage device, a termination device, or an overlength storage device for a fibre-optic cable or for an optical fibre. A splitter module may comprise optical connectors or optical connector couplings for connecting optical fibres to the splitter module. These functional units may allow to use the modular cable distribution device of the present invention in a common fibre-optic communication infrastructure.

The base panel of the fibre-optic distribution device may be adapted to facilitate mounting of a functional unit and placement and routing of optical fibres on the base panel under conditions, where only the front side of the base panel is accessible to an installer. This is achieved, in one embodiment of the invention, by an open structure of the base panel. A base panel having an open structure may have no openings that would require an optical fibre or a patch cable to be led through the opening in a direction parallel to the front side of the base panel, and which comprises only mounting means that can be engaged from the front side of the base panel. No optical fibres or optical cables require routing to or from the rear side of the base panel. Any optical fibre, which is to be placed on the fibre-optic distribution device can, in this embodiment, be moved into its position by a translatory movement towards the rear side of the base panel in a direction perpendicular to the rear side, and no fibres need to be moved into their positions

The fibre-optic distribution device may comprise a second base panel, which may be essentially identical to the first base panel, wherein the fibre routing region of each of the first and second base panels comprises a first and a second fibre entry region, wherein each fibre entry region is arranged next to a peripheral outer edge of the respective base panel, and wherein the fibre routing region extends between the first fibre entry region and the second fibre entry region, and wherein the second base panel is arrangeable relative to the first base panel such that one of the fibre entry regions of the first base panel and one of the fibre entry regions of the second base panel are located adjacent to each other in a manner that a fibre can be routed, through these adjacent fibre entry regions, from the fibre routing region of the first base panel directly into the fibre routing region of the second base panel.

The rear side of each base panel defines a plane. The rear sides of the first and the second base panels may be arranged in a common plane, i.e. the rear side of the second base panel is arranged in the plane defined by the rear side of the first base panel or vice versa. Alternatively, the rear sides of the first and the second base panels may be arranged in different planes that form an angle with respect to each other. The angle may be 90°, 135°, 270°, or any other angle between 0° and 360°. An angle of 180° between the planes corresponds to an arrangement of the rear sides of the base panels in a common plane. An angle of 90° corresponds to an arrangement of the two base panels in a 90° corner, while an angle of 270° corresponds to an arrangement over a rectangular, outward-facing outer corner. The two base panels may be arranged on first and second walls forming a 90° inner corner between them such that the first base panel is arranged on the first wall, and the second base panel is arranged on the second wall. Their respective fibre entry regions may be located adjacent to each other in the vertex of the inner corner. Alternatively, the two base panels may be arranged on first and second walls forming a 90° outward corner between them, such that the first base panel is arranged on the first wall, and the second base panel is arranged on the second wall, with their respective fibre entry regions being located adjacent to each other in the vertex of the outward corner.

The first and second base panels may be arrangeable such that one of the fibre entry regions of the first base panel and one of the fibre entry regions of the second base panel are located adjacent to each other for routing a fibre between the base panels. The base panels may be arrangeable such that these adjacent fibre entry regions are in contact with each other. The base panels may be arrangeable such that these adjacent fibre entry regions overlap each other. A part of the fibre entry region of the first base panel may, for example, extend into fibre entry region of the second base panel. Alternatively, the adjacent fibre entry regions may be spaced apart from each other by a smaller distance. The distance may be chosen such as to accommodate mechanical tolerances in the size of a base panel, or mechanical tolerances in fixing base panels with respect to each other in the modular cable distribution device. In any case, the distance between the adjacent fibre entry regions must be small enough to avoid fibres being insufficiently routed and to keep a fibre in position.

The first and second base panels may be arrangeable such that a cable or an optical fibre can be routed through adjacent fibre entry regions from the fibre routing region of the first base panel directly into the fibre routing region of the second base panel. Direct routing may be achieved by straight routing, i.e. routing that involves no bending of the cable or fibre, or by routing that involves only one single bending of the cable or fibre in the region formed by the fibre entry region of the first base panel and the fibre entry region of the second base panel. Where the first and second base panels are arranged in an angled manner with respect to each other, as described above, a fibre or cable may be routed directly between adjacent fibre entry regions.

The fibre entry region of the first base panel may be larger than the adjacent fibre entry region of the second base panel. Suitable arrangement of the base panels with respect to each other may still allow for direct routing of a fibre between them, albeit possibly only through a part of the larger fibre entry region. In a certain arrangement of the base panels, the fibre entry region of the first base panel may be misaligned with respect to the adjacent fibre entry region of the second base panel. A fibre may still be routed directly through the fibre entry regions.

The panel fixing means may be adapted for mechanically engaging directly with a wall. In this case, no intermediate structure or mounting structure is required. Such panel fixing means adapted for mechanically engaging directly with a wall may comprise, for example, a screw, a nail, a magnet, or an adhesive material. The arrangement of fibre entry regions next to a peripheral outer edge of a base panel allows to install several base panels on a wall in a modular manner. Two or more base panels can be installed and arranged on one and the same wall or on two different walls such that optical fibres can pass from the fibre routing region of one wall-installed base panel into the fibre routing region of the other wall-installed base panel directly, i.e. with no bend or with only one bend of the fibre. In case of installation on two different walls, the walls may meet at an outer or inner corner, forming an angle with each other.

The fibre-optic distribution device may have a further mounting region. The fibre routing region may then be arranged between the mounting regions. A further mounting region may allow to mount functional units in two regions of the base panel. Patch cables between those functional units may thus be particularly short. Also, a second mounting region may facilitate a symmetric arrangement of regions on the base panel. This in turn may allow to avoid the need for "right-hand" or "lefthand" base panels and may result in more cost-effective manufacturing of base panels.

For a distribution device that has first and second base panels, each having first and second fibre entry regions on their respective peripheral outer edges, the first or the second fibre entry region or both may comprise means for preserving a minimum bend radius for a fibre-optic cable or an optical fibre routed through the first or the second fibre entry region. This may allow for installation of base panels such that a fibre can be routed from the fibre routing region of the first base panel into the fibre routing region of the second base panel around a corner, without running a risk of bending the fibre too much.

The fibre-optic distribution device may have a base panel that has a rectangular shape. A rectangular shape may allow for a particularly good utilisation of available space in the distribution device. For a distribution device that has a plurality of base panels having fibre entry regions on their respective peripheral outer edges, this shape may also allow for an easy way to arrange the base panels such that fibre entry regions on their respective peripheral outer edges are located adjacent to each other.

A functional unit may be mounted on the mounting region of a base panel via a support element. The support element may provide additional functionality like, for example, locking, latching, or labelling of functional units. Mounting via a support element may allow for mounting of different types of functional units to the mounting region without having to modify any mounting means on the respective base panel.

A functional unit may be pivotably mounted on the mounting region of the base panel. Pivotable mounting may be advantageous in facilitating access to certain parts of functional units, that may normally be accommodated in an inaccessible area of the mounting region. A pivotable mounting may thus save space on the base panel and in the fibre-optic distribution unit.

The invention will now be described in more detail with reference to the following Figures exemplifying particular embodiments of the invention:
- Fig. 1: Plan view of a base panel according to the present invention;
- Fig. 2a: Side view of the base panel of Fig. 1 before installing;
- Fig. 2b: Side view of the base panel of Fig. 2a after installing to a wall via a mounting structure;
- Fig. 3: Plan view of a fibre-optic distribution device according to the invention, comprising three base panels of the type shown in Figure 1;
- Fig. 4: Plan view of a fibre-optic distribution device according to the invention, comprising two base panels, each having two mounting regions;
- Fig. 5a: Perspective view of a front side of a base panel according to a further embodiment of the invention; and
- Fig. 5b: Perspective view of the rear side of the base panel of Figure 5a.
- Fig. 6: Perspective view of a fibre-optic distribution device according to the invention, comprising four base panels in an inner corner arrangement;
- Fig. 7: Plan view of a further fibre-optic distribution device according to the invention;
- Fig. 8a: Perspective view of a support element for a functional unit in the pivot-in position;
- Fig. 8b: Perspective view of the support element of Figure 8a in the pivot-out position; and
- Fig. 8c: Perspective view of the support element of Figure 8a in the pivot-in position with a functional unit placed thereon.

Herein below various embodiments of the present invention are described and shown in the Figures, wherein like elements are provided with the same reference numbers.

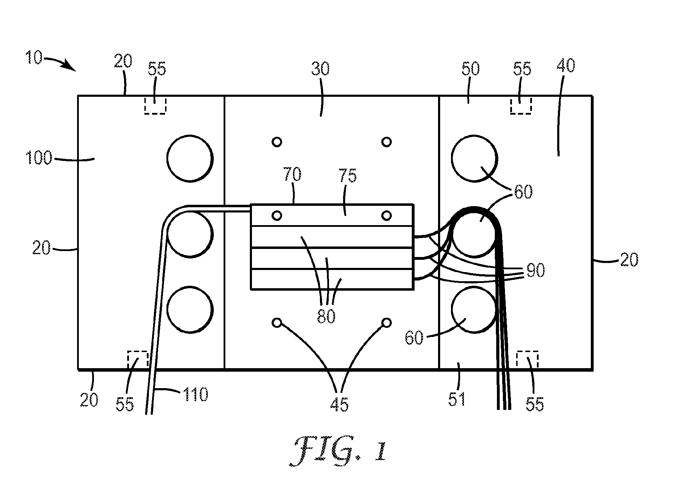

**Figure 1** shows, in plan view, a base panel 10 of a fibre-optic distribution device according to the present invention. The front side of the base panel 10 is visible in Figure 1. The base panel 10 has a rectangular shape and it is delimited by a peripheral outer edge 20. The base panel 10 comprises, on its front side, a mounting region 30 and a fibre routing region 40. The mounting region 30 is arranged adjacent to the fibre routing region 40 and comprises mounting means 45 for mounting functional units 70 on the mounting region 30. In this embodiment, the mounting means 45 are threads 45 that can cooperate with bolts, with which splitter modules, fibre splice trays or other functional units 70 can be fixed to the base panel 10. One functional unit 70 is shown in a mounted state, fixed to the base panel 10 in the mounting region 30.

For installing the base panel 10 flat on a wall, such that the panel rear side faces the wall, the base panel 10 comprises panel fixing means 55, which are arranged on the rear side of the base panel 10 and which are therefore not visible in Figure 1. They are indicated with dashed lines. Two of the panel fixing means 55 are arranged close to the upper section of the peripheral outer edge 20 (as appearing in the Figure), two further panel fixing means 55 are arranged close to the lower section of the peripheral outer edge 20 of the base panel 10.

Routing means 60 are arranged in the fibre routing region 40. A routing means 60 comprises a hollow cylindrical pole 60. The radius of the cross section of the pole 60 is approximately 25 mm, in order to provide a minimum bend radius of that size to fibres 90 or cables routed by the pole 60.

The fibre routing region 40 comprises a first fibre entry region 50 and a second fibre entry region 51. Each fibre entry region 50, 51 is arranged on the peripheral outer edge 20 of the base panel 10. The fibre routing region 40 extends between the first fibre entry region 50 and the second fibre entry region 51. The fibre routing region 40 further comprises routing means 60 for routing a fibre from or to a functional unit 70 mounted in the mounting region 30.

The one functional unit 70 that is shown in Figure 1 is fixed to the base panel 10 by two threaded pins that engage with two of the threads 45. In addition, guiding protrusions on the functional unit 70 are inserted into corresponding openings (not shown) on the base panel 10. The functional unit 70 comprises a splitter unit 75 and four termination modules 80. Optical fibres 90 are connected to the termination modules 80. Each fibre 90 is routed from the functional unit 70 by the routing means 60 in the fibre routing region 40 to the second fibre entry region 51.

The base panel 10 further comprises a feeder cable region 100, through which a feeder cable 110 can be routed to the splitter unit 75 in the functional unit 70. The feeder cable 110 comprises one or more individual optical fibres that transmit input signals that are being distributed into individual optical fibres 90 by the splitter unit 75 and the termination modules 80.

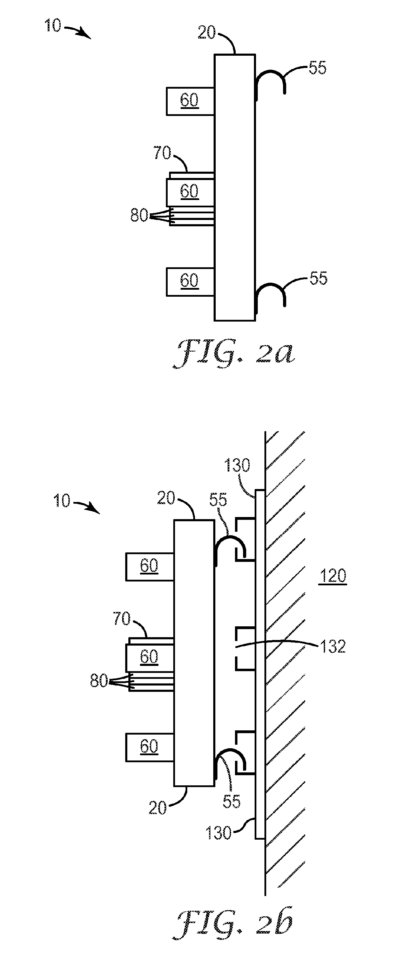

The base panel 10 of Figure 1 is shown in side view in **Figure 2a****.** The panel fixing means 55 have the shape of an inverted "U". They serve to fix the base panel 10 to a vertical wall 120 via a mounting structure 130. **Figure 2b** shows the base panel 10 being installed on a wall 120 via a mounting structure 130. The wall 120 is vertical, and gravity acts in a downward direction in Figure 2b. The mounting structure 130 is a mounting rail 130, that has openings 132, into which the panel fixing means 55 can be inserted for mechanical engagement. Gravity prevents the panel fixing means 55 from slipping out of the openings 132. The panel fixing means 55 have a U-shaped cross section. They provide for releasable installing of the base panel 10 on the wall 120, because the panel fixing means 55 can be released from the mounting rail 130 by lifting the base panel 10 slightly and moving it such that the panel fixing means 55 disengage from the openings 132 of the mounting rail 130, and removing the base panel 10 from the mounting rail 130 and from the wall 120.

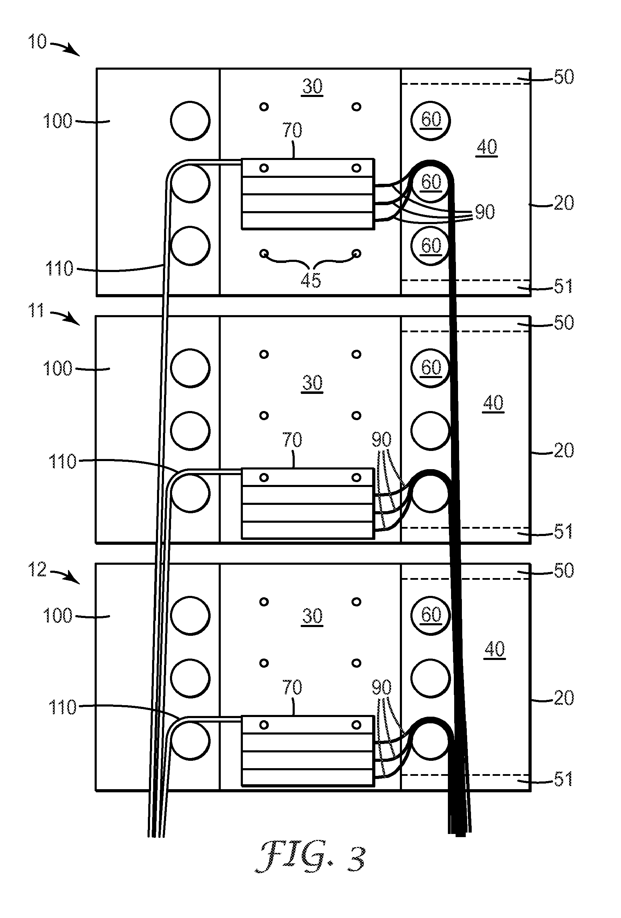

In **Figure 3****,** a fibre-optic distribution device according to the invention is shown that comprises three identical base panels 10, 11, 12. The first base panel 10 is the one drawn at the top, the second base panel 11 is the one drawn in the middle, and the third base panel 12 is the one drawn at the bottom of Figure 3. Each of the base panels 10, 11, 12 is identical to the base panel 10 of Figure 1. For clarity of the drawing, only one functional unit 70 is shown mounted on each of the base panels 10, 11, 12. The base panels 10, 11, 12 are arranged with their rear sides lying in the same plane. The first base panel 10 and the second base panel 11 are arranged relative to each other such that the second fibre entry region 51 of the first base panel and the first fibre entry region 50 of the second base panel 11 are located adjacent to each other. A gap between the base panels 10, 11, 12 allows for tolerances in the size and the mounting of the base panels 10, 11. A fibre 90 can be routed, through the adjacent cable entry regions 51, 50 of the first and the second base panel, respectively, from the fibre routing region 40 of the first base panel 10 directly into the fibre routing region 40 of the second base panel 11. A fibre 90 coming from the functional unit 70 mounted on the first base panel 10 is routed straight, i.e. without any bend, from the second fibre entry region 51 of the first base panel 10 into the first fibre entry region 50 of the second base panel 11.

The fibre 90 is routed further through the fibre routing region 40 of the second base panel 11, through the second fibre entry region 51 of the second base panel 11 and through the first fibre entry region 50 of the third base panel 12 into the fibre routing region 40 of the third base panel 12 and further to an outside of the third base panel 12.

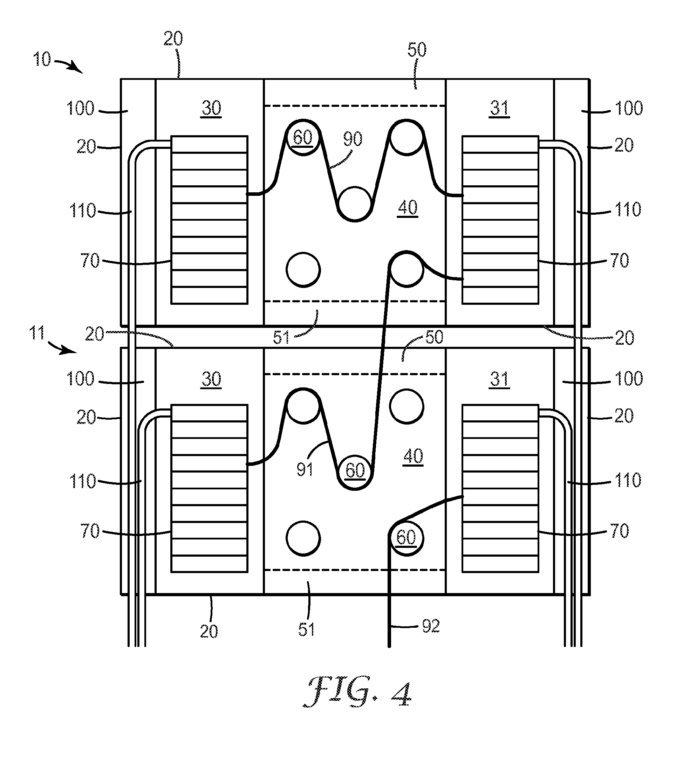

**Figure 4** is a plan view of a fibre-optic distribution device 1 according to the invention, comprising two alternative base panels 10, 11, arranged flat on a wall, next to each other. The first base panel 10 is the one drawn at the top, the second base panel 11 is the one drawn at the bottom of the Figure. The second base panel 11 is identical to the first base panel 10. Each base panel 10, 11 has a front side, an essentially flat rear side, and a peripheral outer edge 20. Each base panel 10, 11 has a first mounting region 30 and a further, second mounting region 31. A fibre routing region 40 is arranged between the mounting regions 30, 31. It extends between a first fibre entry region 50 and a second fibre entry region 51. The first fibre entry region 50 and a second fibre entry region 51 are arranged on opposed sections of the peripheral outer edge 20. Five routing means 60 are arranged in the routing region 40 of each base panel 10, 11. Four of these mounting means 60 are arranged in the corners of a virtual rectangle, while the fifth routing means 60 is arranged in the centre of the virtual rectangle.

Each base panel 10, 11 is equipped with two feeder cable regions 100, between which the mounting regions 30, 31 and the fibre routing region 30 are arranged. In each mounting region 30, 31, a functional unit 70 is mounted. A feeder cable 110 can be routed through a feeder cable region 100 to a functional unit 70.

On the base panel 10, the arrangement of the mounting regions 30, 31, the mounting means 45, the fibre routing region 40, the routing means 60 and the feeder cable regions 100 is symmetrical with respect to a plane which is oriented parallel to the short sections of the peripheral outer edge 20 of the rectangular base panel 10 and perpendicular to the flat rear side of the base panel 10. The base panels 10, 11 are arranged in the same plane, i.e. their flat rear sides lie in the same plane. The base panels 10, 11 are arranged relative to each other such that the second fibre entry region 51 of the first base panel 10 and the first fibre entry region 50 of the second base panel 11 are located adjacent to each other. A fibre 91 can be routed through these adjacent fibre entry regions 51, 50 from the fibre routing region 40 of the first base panel 10 directly into the fibre routing region 40 of the second base panel 11. An optical fibre 91 can thereby be routed from a functional unit 70 mounted on a mounting region 30, 31 of the first panel to a functional unit 70 mounted on a mounting region 30, 31 of the second panel 11 or vice versa.

A further optical fibre 90 can be routed from a functional unit 70 mounted on one mounting region 30 to a functional unit 70 mounted on the other mounting region 31 of the same base panel 10 by the routing means 60. A further optical fibre 92 can be routed from a functional unit 70 on the second base panel 11 by routing means 60 through the fibre routing region 40 and the second fibre entry region 51 of the second base panel 11 to an outside of the second base panel 11 or into a fibre routing region 40 of a further base panel (not shown).

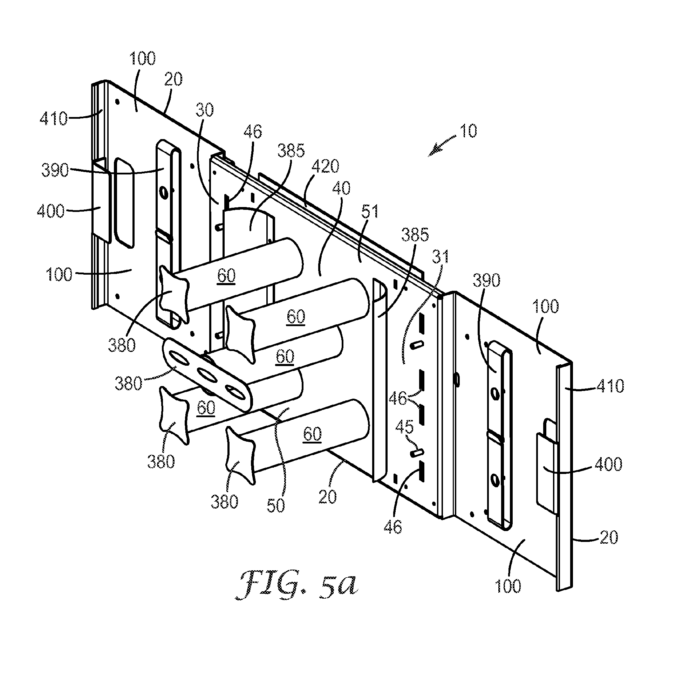

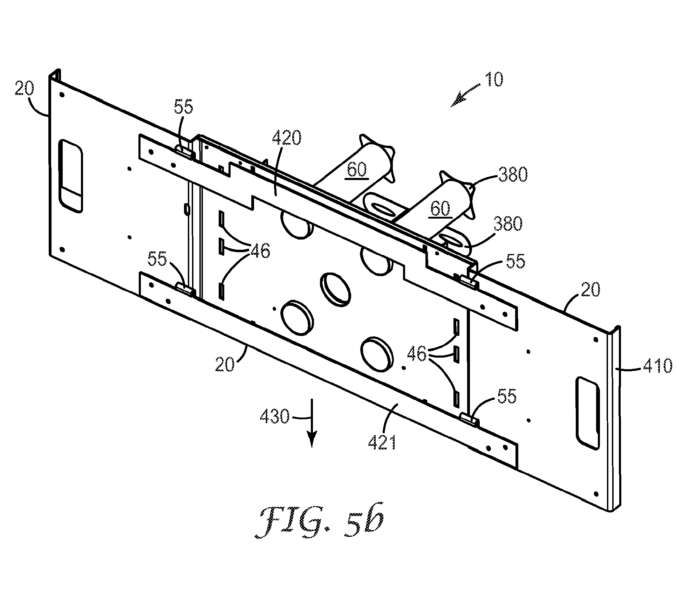

In Figures 5a and 5b, a further embodiment of a base panel 10 of a fibre-optic distribution device 1 according to the invention is shown in perspective views. The front side of the base panel 10 is shown in **Figure 5a****.** The base panel 10 has two mounting regions 30, 31, and a fibre routing region 40 arranged between the mounting regions 30, 31. The fibre routing region 40 extends between a first fibre entry region 50 and a second fibre entry region 51, which are arranged on opposed sections of the peripheral outer edge 20 of the base panel 10. Five routing means 60 are arranged in the routing region 40 of the base panel 10. Four of these routing means 60 are arranged in the corners of a virtual rectangle, while the fifth routing means 60 is arranged in the centre of the virtual rectangle. Each routing means 60 is equipped, at the end portion distal from the rear side of the base panel 10, with constraining plates 380. These constraining planes 380 are flat and prevent slipping of an optical fibre 90 off the routing means 60, for example during installation of additional optical fibres 90 or removal of optical fibres 90. The constraining plate 380 of the routing means 60 located in the centre of the virtual rectangle has a different shape than the constraining plates 380 of the other routing means 60. It has been found advantageous for this central constraining plate 380 to extend mainly in a lateral direction, as this makes installation of optical fibres 90 in the routing region 40 easier.

Additional fibre routing means are two curved guide panels 385, mounted in the fibre routing region 40. The help in routing optical fibres 90 from the fibre routing region 40 towards functional units 70 (not shown) mounted in a mounting region 30, 31 without violating the minimum bend radius requirement for the optical fibres 90.

A functional unit 70 can be mounted in one of the mounting regions 30, 31 on the base panel 10 with the help of mounting means 45. Further to mounting means in the form of threads 45, a plurality of mounting slits 46 can engage with corresponding flat hooks on a functional unit 70 to mount the functional unit 70 on the base panel 10.

The base panel 10 is equipped with two feeder cable regions 100, between which the mounting regions 30, 31 and the fibre routing region 40 are arranged. In each mounting region 30, 31, one or more functional units 70 can be mounted. A feeder cable 110 can be routed through a feeder cable region 100 to a functional unit 70.

In each feeder cable region 100, a cable guiding clip 390 is arranged. Its rear part being fixed to the feeder cable region 100, its front arms are in resilient contact with each other, so that a feeder cable 110 can be inserted between them and not slip out. The cable guiding clip 390 holds one or more feeder cables 110 close to the front surface of the base panel 10 in the feeder cable region 100. The base panel 10 also comprises, in each feeder cable region 100, a cable guiding tab 400 and a guiding wall 410. The guiding tab 400 helps to keep a feeder cable 110 close to the front surface of the base panel 10 in the feeder cable region 100. The guiding wall 410 helps to prevent a feeder cable 110 from extending beyond the peripheral outer edge 20 of the base panel 10.

An optical fibre 90 can be routed from a functional unit 70 mounted on one of the mounting regions 30, 31 to a further functional unit 70 mounted on the other mounting region 30, 31 of the same base panel 10 by the routing means 60 and by the routing means 385.

The rear side of the base panel 10 of Figure 5a is illustrated in **Figure 5****b.** The rear side of the base panel 10 is essentially flat. This enables the base panel 10 to be installed flat on a wall. A section that protrudes by a small distance compared to the overall extension of the base panel 10, e.g. the section carrying the routing means 60, does not prevent the rear side of the base panel from being flat or essentially flat.

Two support bars 420, 421 are arranged horizontally on the rear side of the base panel 10. They are designed to carry the weight of the entire base panel 10 and of any functional units 70, optical fibres 90, and feeder cables 110 supported by the base panel 10. Each support bar 420, 421 comprises two panel fixing means 55, which are hooks 55. The hooks 55 are a single piece with the respective support bar 420, 421. The hooks 55 are adapted to engage with corresponding openings in a mounting structure 130 (not shown) in order to install the base panel 10 on a wall via the mounting structure 130. The base panel 10 shown in Figure 5b is to be mounted on a vertical wall, such that the base panel 10 is held on the wall by the hooks 55 against the force of gravity, which acts in a direction indicated by arrow 430.

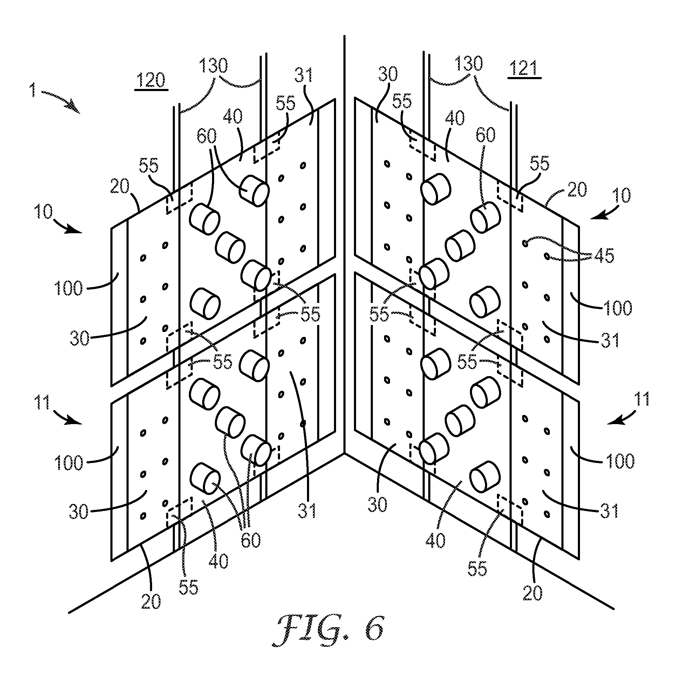

A further fibre-optic distribution device 1 according to the invention is shown in Figure 6. It comprises two base panels 10, 11 arranged on a first vertical wall 120, and two further base panels 10, 11 arranged on a second vertical wall 121. The two base panels 10, 11 are identical to the base panels 10, 11 of Figure 4 and identical to each other. The first wall 120 is the one drawn on the left side of Figure 6, the second wall 121 is the wall drawn on the right side. The walls 120, 121 meet at an angle of 90° to form an inner corner. The base panels 10, 11 on each wall 120, 121 are arranged relative to each other such that two of their respective fibre entry regions 50, 51 are located adjacent to each other in a manner that a fibre can be routed from the fibre routing region 40 of the first base panel 10 directly into the fibre routing region 40 of the second base panel 11.

The rear sides of the two base panels 10, 11, installed on the first wall 120, are arranged in a common plane. This common plane is parallel to the plane of the first vertical wall 120. Similarly, the rear sides of the two base panels 10, 11, mounted on the second wall 121, are arranged in a common vertical plane, which is parallel to the plane of the second vertical wall 121.

The base panels 10, 11 on the first wall 120 and the base panels 10, 11 on the second wall 121 are all identical. The base panel 10 on the first wall 120 and the base panel 10 on the second wall 121 are arrangeable in the same way as the base panels 10, 11 shown in Figure 4. However, in the embodiment of the fibre-optic distribution device 1 shown in Figure 6, they are arranged such that the planes of their rear sides form an angle with respect to each other. The angle is 90°.

The base panels 10, 11 on the first wall 120 are installed on the wall 120 by means of two mounting rails 130, that extend vertically on the wall 120. The mounting rails 130 are fixed to the wall 120 by screws. The base panels 10, 11 are removably mounted to the mounting rails 130 by panel fixing means 55, which are not visible in the Figure. The panel fixing means 55 are hook-shaped protrusions 55 on the rear side of each base panel 10, 11, which engage with openings 132 in the mounting rails 130, as shown in Figures 2a and 2b. The protrusions and the openings are not visible in the Figure. The openings are spaced on the rails 130 such that two panels 10, 11, installed one above the other, are spaced apart by a small gap.

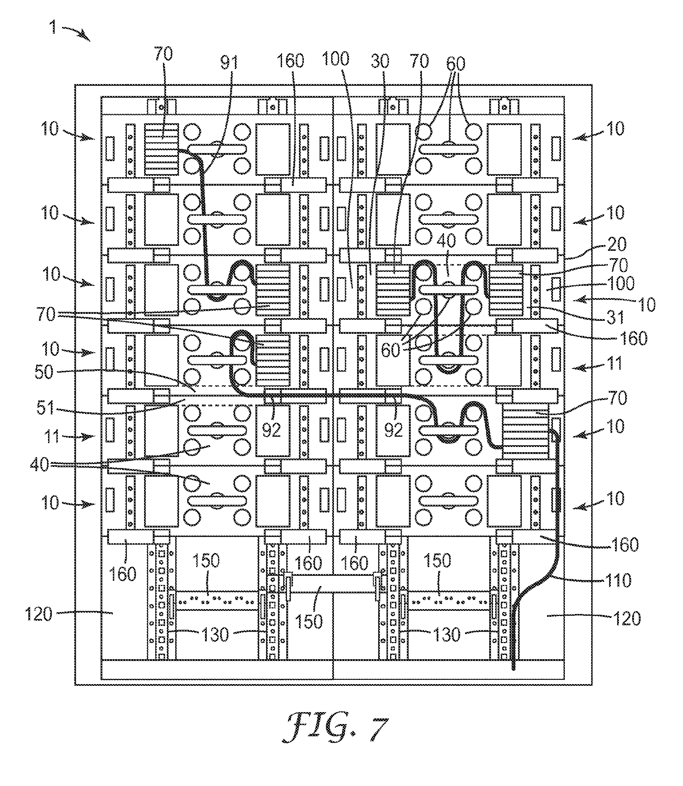

**Figure 7** is a plan view of a fibre-optic distribution device 1 according to the invention. It comprises a plurality of base panels 10, 11, installed on a flat vertical wall 120. All the base panels 10, 11 are identical to each other and similar to the base panel 10 shown in Figure 4, except for a few differences explained below. The rear sides of the base panels 10, 11 are arranged in one common plane. That plane is vertical and parallel to the plane of the wall 120. The base panels 10, 11 are arranged in two vertical columns and six horizontal rows. The base panels 10, 11 of one respective column are installed on the wall 120 via panel fixing means 55 (not visible) engaging with two vertical mounting rails 130. Spacer elements 150 provide for appropriate distance between the mounting rails 130 of one column and between the mounting rails 130 of two adjacent columns.

Within a column, a first base panel 10 is arranged relative to a second base panel 11 such that the first fibre entry region 50 of the first base panel 10 and the second fibre entry region 51 of the second panel 11 are located adjacent to each other in a manner that a fibre can be routed through the adjacent fibre entry regions 50, 51 from the fibre routing region 40 of the first base panel 10 directly into the fibre routing region 40 of the second base panel 11. An optical fibre 90 can be routed between two functional units 70 mounted on the same base panel 10. A fibre 91 can be routed between a functional unit 70 mounted on one base panel 10 and a functional unit 70 mounted on a different base panel 10, 11 in the same column. An optical fibre 92 can be routed between a functional unit 70 mounted on a base panel 10 and a functional unit 70 mounted on a different base panel 10, 11 in a different column. In order to route the fibre 92 from one column into an adjacent column, cable trays 160 are mounted on the bottom section (in this Figure) of the peripheral outer edge 20 of each base panel 10, 11. One cable tray 160 is mounted below one mounting region 30 and below the feeder cable region 100 adjacent to that mounting region 30. A further cable tray 160 is mounted below the other mounting region 31 and the feeder cable region 100 adjacent to that mounting region 31. Each cable tray 160 is in the form of a longitudinal box with opposed open end faces to allow a fibre to enter and exit, and one open side face, which is the side face directed away from the rear side of the base panel 10, 11. The cable trays 160 support and route those optical fibres 90, 91, 92 horizontally, which are routed from one base panel 10, 11 to a horizontally-adjacent base panel 10, 11. The cable tray 160 routes optical fibres horizontally towards the peripheral outer edge 20 of the base panel 10. Each cable tray 160 is mounted on the base panel 10, 11, but at a distance from the front surface of the base panel 10, 11, so that feeder cables 110 can be routed in the feeder cable region 100 through the space between the front surface of the base panel 10, 11 and the cable tray 160.

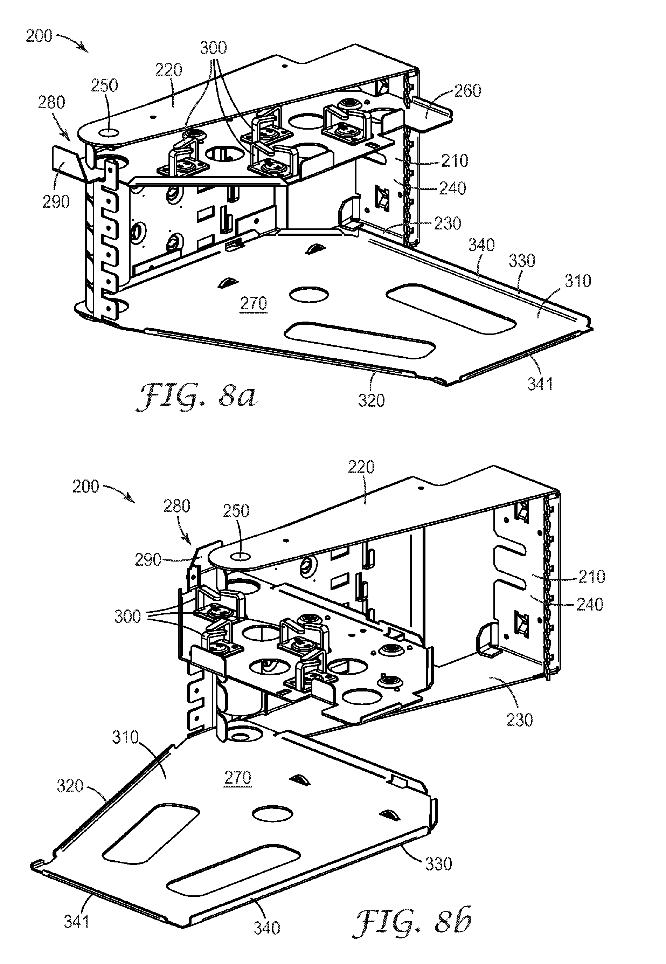

Functional units 70, like for example splitter modules, can be mounted on the mounting region 30, 31 of a base panel 10, 11 in various ways. Pivotable mounting is advantageous, because it facilitates access to a functional unit 70 during installation of an optical fibre 90 or of a feeder cable 100 to the functional unit 70. **Figure 8a** is a perspective sketch of a support element 200 that allows pivotable movement of a functional unit 70 mounted on it. The support element 200 comprises a chassis 210 which has a flat top panel 220 and a flat bottom panel 230 parallel to each other, and a mounting panel 240, extending between a first end portion of the top panel 220 and a first end portion of the bottom panel 230. The mounting panel 240 can be fixed to the mounting surface 30, 31 of a base panel 10, 11 of a modular cable distribution device 1 according to the invention.

A pivot axis 250 extends vertically between a second end portion of the top panel 220 and a second end portion of the bottom panel 230. The second end portions are at a distance from the first end portions of the top panel 220 and the bottom panel 230. A fibre management tray 260 and a carrier tray 270 are mounted on the pivot axis 250 such that they are pivotable around the pivot axis 250 in a horizontal direction. The fibre management tray 260 and a carrier tray 270 are connected with each other in the area where they are mounted on the pivot axis 250, such that they are pivotable together. When the fibre management tray 260 is pivoted, the carrier tray 270 is pivoted with it, and vice versa. In a pivoted-in position, shown in Figure 8a, the fibre management tray 260 is located partly under the top panel 220 of the chassis 210, and the carrier tray 270 is located above the bottom panel 230. The pivoted-out position is shown in Figure 8b.

A fibre-optic cable, e.g. a feeder cable 100, or an optical fibre 90 can enter the fibre management tray 260 through a fibre entry port 280 of the fibre management tray 260, located next to the pivot axis 250, and formed by an entry flange 290 and the pivot axis 250. Routing rings 300 are arranged on the fibre management tray 260 for keeping a cable 110 or fibre 90 in position on the fibre management tray 260, and for preserving a minimum bending radius of the cable 110 or fibre 90.

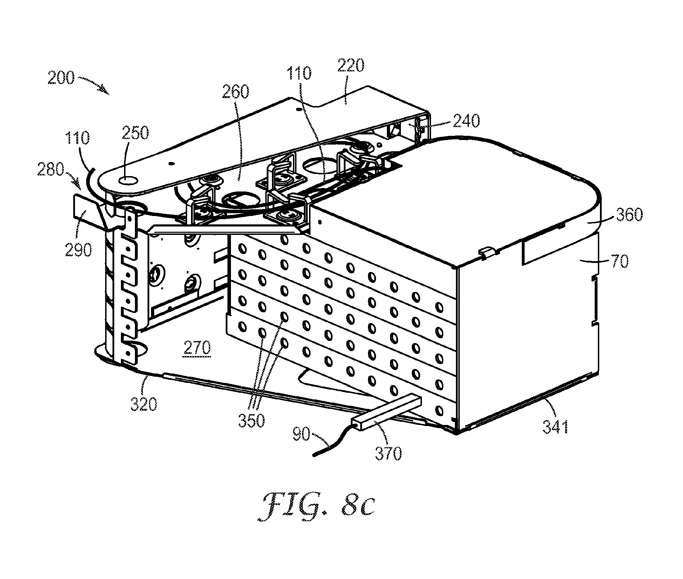

The carrier tray 270 is essentially L-shaped, i.e. it has two arms. One arm of the carrier tray 270 provides a flat carrying surface 310 with a front edge 320 and a rear edge 330. In the pivoted-in position, the rear edge 330 is parallel to the mounting panel 240 and, once the support element 200 is mounted on a base panel 10, 11, directed towards the mounting surface 30, 31 of the base panel 10, 11. A functional unit 70 (not shown) can be put on the carrying surface 310. The functional unit 70 may be fixed to the carrying surface 310, but for ease of installation and maintenance, it just sits on the carrying surface 310 and can be removed easily. A rear flange 340 and a side flange 341 on edges of the carrier tray 270 prevent the functional unit 70 from falling from the carrying surface 310 during pivoting. A functional unit 70 is advantageously placed on the carrier tray 270 of the support element 200 such that a front side, which may need to be accessible more than other sides, is located next to the front edge 320 of the carrier tray 270, and its rear side, which may need to be less accessible, is located next to the rear edge 330 of the carrier tray 270. In the pivot-in position, which is the normal position of the trays 260, 270, the front side of the functional unit 70 is accessible. Advantageously, a functional unit 70, that is used for patching, is arranged such that optical connector couplings 350 for connecting to connectors of patch cables 90 or patch fibres 90 are arranged on the front side of the functional unit 70, i.e. on a side located next to the front edge 320 of the carrier tray 270. Figure 8c shows a suitable arrangement.

A cable 110 or an optical fibre 90 can be routed from the fibre management tray 260 to a functional unit 70 arranged on the carrying surface 310 of the carrier tray 270. A feeder cable 110, for example, can leave the fibre management tray 260 at an edge of the fibre management tray 260 in a direction parallel to the edge and enter a functional unit 70 placed on the carrier tray 270 at the top part of the functional unit 70.

**Figure 8b** shows the support element 200 of Figure 8a in the pivot-out position of the fibre management tray 260 and the carrier tray 270. The trays 260, 270 have been pivoted around the pivot axis 250 by an angle of approximately 90° to the left (in the Figure). While in the pivot-in position, shown in Figure 8a, a front side of a functional unit 70 placed in the carrier tray 270 is readily accessible, i.e. a side which is located next to the front edge 320 of the carrier tray 270, the pivot-out position facilitates access to a lateral side, i.e. a side next to side flange 341, and to a rear side, i.e. a side next to rear flange 340, of the functional unit 70.

**Figure 8c** is a perspective view of the support element 200 of Figures 8a and 8b, with a functional unit 70 placed on the carrier tray 270. A feeder cable 110 enters the support element 200 through the fibre entry port 280 next to the pivot axis 250. The feeder cable 110 enters the fibre management tray 260, and is routed by the routing rings 300. Slack of the feeder cable 110 is accommodated on the fibre management tray 260. The end of the feeder cable 110 is routed into the functional unit 70 at the top of the functional unit 70.

The functional unit 70 is a splitter module 70. It is pivotably mounted, through the support element 200, in a mounting region 30, 31 of a base panel 10, 11 as described above. At the top of the splitter module 70, it comprises a splitter 360, which is connected to the feeder cable 110, and which splits the signal transmitted by the feeder cable 110 into individual signals that are to be individually transmitted by optical fibres 90. The splitter 360 provides the individual signals to sixty-four optical connector couplings 350, arranged in four rows under the splitter 360. Optical fibres, e.g. patch fibres 90, can be connected to these connector couplings 350 via optical connectors 370. For clarity, only one optical fibre 90 and one optical connector 370 is shown. A patch fibre 90, originating from a connector 370 connected to a coupling 350 of the splitter module 70, is routed into the fibre routing region 40 of the base panel 10, 11, on which the support element 200 is mounted.

## Claims

1. Fibre-optic distribution device, comprising
a wall-installable first base panel (10) having a front side and an essentially flat rear side, the front side and the rear side facing into opposite directions,
the base panel (10) comprising on its front side
- a mounting region (30), comprising mounting means (45, 46) for mounting a fibre-optic functional unit (70) on the mounting region (45, 46), and
- a fibre routing region (40), comprising routing means (60, 385) for routing an optical fibre (90) from or to the mounting region (30),
**characterized in that**
the base panel (10) further comprises panel fixing means (55) for installing the base panel (10) flat on a wall (120) such that the rear side of the base panel (10) faces the wall (120), the panel fixing means (55) being arranged on the rear side of the base panel (10).

2. Fibre-optic distribution device according to claim 1, wherein the panel fixing means (55) is/are adapted for mechanically engaging directly with a wall (120).

3. Fibre-optic distribution device according to claim 2, wherein the panel fixing means (55) comprise(s) a screw, a nail, a magnet, or an adhesive material.

4. Fibre-optic distribution device according to claim 1, wherein the panel fixing means (55) is/are adapted for installing the base panel (10) on a wall (120) via a mounting structure (130) fixed to the wall (120).

5. Fibre-optic distribution device according to claim 4, wherein the panel fixing means (55) comprise(s) a protrusion for mechanically engaging with a protrusion, a recess or an opening in the mounting structure (130).

6. Fibre-optic distribution device according to claim 5, wherein the protrusion comprises a hook-shaped or a mushroom-shaped part.

7. Fibre-optic distribution device according to claim 4, wherein at least a part of the panel fixing means (55) has an L-shaped, a U-shaped or a hook-shaped cross-section.

8. Fibre-optic distribution device according to claim 4, wherein the panel fixing means (55) comprise(s) a recess or an opening for mechanically engaging with a protrusion of the mounting structure (130).

9. Fibre-optic distribution device according to any one of the preceding claims, wherein the panel fixing means (55) is/are adapted for releasable installing of the base panel (10) to a wall (120).

10. Fibre-optic distribution device according to any one of the preceding claims, wherein the base panel (10) comprises a plurality of panel fixing means (55), the panel fixing means (55) being linearly arranged.

11. Fibre-optic distribution device according to any one of the preceding claims, wherein the fibre routing region (40) comprises five routing means (60), and wherein four of the routing means (60) are arranged at the corners of a virtual rectangle, and the fifth routing means (60) is arranged in the centre of the virtual rectangle.

12. Fibre-optic distribution device according to any one of the preceding claims, wherein the base panel (10) is adapted to be installed on a vertical wall, and wherein the base panel (10) comprises a cable tray (160) for routing an optical fibre (90) horizontally towards a peripheral outer edge (20) of the base panel (10).

13. Fibre-optic distribution device according to any one of the preceding claims, wherein the functional unit (70) comprises a splitter, a splitter module, a splice tray, a connector storage device, a termination device, or an overlength storage device for a fibre-optic cable or for an optical fibre.

14. Fibre-optic distribution device according to any one of the preceding claims, wherein the base panel (10) of the fibre-optic distribution device (1) is adapted to facilitate mounting of a functional unit (70) and placement and routing of optical fibres (90) on the base panel (10) under conditions, where only the front side of the base panel (10) is accessible to an installer.

15. Fibre-optic distribution device according to any one of the preceding claims, further comprising a second base panel (11), which is essentially identical to the first base panel (10),
wherein the fibre routing region (40) of each of the first and second base panels (10, 11) comprises a first and a second fibre entry region (50, 51), wherein each fibre entry region (50, 51) is arranged next to a peripheral outer edge (20) of the respective base panel (10), and wherein the fibre routing region extends between the first fibre entry region (50, 51) and the second fibre entry region (50, 51),
and wherein the second base panel (11) is arrangeable relative to the first base panel (10) such that one of the fibre entry regions (50, 51) of the first base panel (10) and one of the fibre entry regions (50, 51) of the second base panel (11) are located adjacent to each other in a manner that a fibre (90) can be routed, through these adjacent fibre entry regions (50, 51), from the fibre routing region (40) of the first base panel (10) directly into the fibre routing region (40) of the second base panel (11).

## Amended claims

### Amended claims in accordance with Rule 137(2) EPC.

**1.** Fibre-optic distribution device, comprising a wall-installable first base panel (10) having a front side and an essentially flat rear side, the front side and the rear side facing into opposite directions, the base panel (10) comprising on its front side
- a first mounting region (30), comprising mounting means (45, 46) for mounting a fibre-optic functional unit (70) on the first mounting region (30), and
- a fibre routing region (40), comprising routing means (60, 385) for routing an optical fibre (90) from or to the first mounting region (30),
wherein the base panel (10) further comprises panel fixing means (55) for installing the base panel (10) flat on a wall (120) such that the rear side of the base panel (10) faces the wall (120), the panel fixing means (55) being arranged on the rear side of the base panel (10),
**characterized in that** the fibre-optic distribution device comprises a second mounting region (31), wherein the fibre routing region (40) is arranged between the first mounting region (30) and the second mounting region (31), and **in that** the functional unit (70) comprises a splitter module, a splice tray, or a connector storage device for a fibre-optic cable or for an optical fibre.

**2.** Fibre-optic distribution device according to claim 1, wherein the panel fixing means (55) is/are adapted for mechanically engaging directly with a wall (120).

**3.** Fibre-optic distribution device according to claim 2, wherein the panel fixing means (55) comprise(s) a screw, a nail, a magnet, or an adhesive material.

**4.** Fibre-optic distribution device according to claim 1, wherein the panel fixing means (55) is/are adapted for installing the base panel (10) on a wall (120) via a mounting structure (130) fixed to the wall (120).

**5.** Fibre-optic distribution device according to claim 4, wherein the panel fixing means (55) comprise(s) a protrusion for mechanically engaging with a protrusion, a recess or an opening in the mounting structure (130).

**6.** Fibre-optic distribution device according to claim 5, wherein the protrusion comprises a hook-shaped or a mushroom-shaped part.

**7.** Fibre-optic distribution device according to claim 4, wherein at least a part of the panel fixing means (55) has an L-shaped, a U-shaped or a hook-shaped cross-section.

**8.** Fibre-optic distribution device according to claim 4, wherein the panel fixing means (55) comprise(s) a recess or an opening for mechanically engaging with a protrusion of the mounting structure (130).

**9.** Fibre-optic distribution device according to any one of the preceding claims, wherein the panel fixing means (55) is/are adapted for releasable installing of the base panel (10) to a wall (120).

**10.** Fibre-optic distribution device according to any one of the preceding claims, wherein the base panel (10) comprises a plurality of panel fixing means (55), the panel fixing means (55) being linearly arranged.

**11.** Fibre-optic distribution device according to any one of the preceding claims, wherein the fibre routing region (40) comprises five routing means (60), and wherein four of the routing means (60) are arranged at the corners of a virtual rectangle, and the fifth routing means (60) is arranged in the centre of the virtual rectangle.

**12.** Fibre-optic distribution device according to any one of the preceding claims, wherein the base panel (10) is adapted to be installed on a vertical wall, and wherein the base panel (10) comprises a cable tray (160) for routing an optical fibre (90) horizontally towards a peripheral outer edge (20) of the base panel (10).

**13.** Fibre-optic distribution device according to any one of the preceding claims, wherein the base panel (10) of the fibre-optic distribution device (1) is adapted to facilitate mounting of a functional unit (70) and placement and routing of optical fibres (90) on the base panel (10) under conditions, where only the front side of the base panel (10) is accessible to an installer.

**14.** Fibre-optic distribution device according to any one of the preceding claims, further comprising a second base panel (11), which is essentially identical to the first base panel (10),
wherein the fibre routing region (40) of each of the first and second base panels (10, 11) comprises a first and a second fibre entry region (50, 51), wherein each fibre entry region (50, 51) is arranged next to a peripheral outer edge (20) of the respective base panel (10), and wherein the fibre routing region extends between the first fibre entry region (50, 51) and the second fibre entry region (50, 51),
and wherein the second base panel (11) is arrangeable relative to the first base panel (10) such that one of the fibre entry regions (50, 51) of the first base panel (10) and one of the fibre entry regions (50, 51) of the second base panel (11) are located adjacent to each other in a manner that a fibre (90) can be routed, through these adjacent fibre entry regions (50, 51), from the fibre routing region (40) of the first base panel (10) directly into the fibre routing region (40) of the second base panel (11).
